**Europäisches Patentamt**

**European Patent Office**

**Office européen des brevets**

(19)

(11) Veröffentlichungsnummer : **0 293 810 B1**

# EUROPÄISCHE PATENTSCHRIFT

(12)

(45) Veröffentlichungstag der Patentschrift :
17.04.91 Patentblatt 91/16

(51) Int. Cl.⁵ : **G01N 21/47, G01N 21/25**

(21) Anmeldenummer : **88108640.9**

(22) Anmeldetag : **30.05.88**

(54) **Optische Vorrichtung zum Messen des Lumineszenzanteils bei Oberflächen oder zur Farbmessung an aufgehellten Proben.**

(30) Priorität : 02.06.87 DE 3718500

(43) Veröffentlichungstag der Anmeldung :
07.12.88 Patentblatt 88/49

(45) Bekanntmachung des Hinweises auf die
Patenterteilung :
17.04.91 Patentblatt 91/16

(84) Benannte Vertragsstaaten :
AT BE CH DE FR GB IT LI LU NL SE

(56) Entgegenhaltungen :
DE-A- 3 332 986
DE-A- 3 406 848
GB-A- 822 447
GB-A- 1 346 766
GB-A- 1 379 405

(56) Entgegenhaltungen :
US-A- 4 243 319
TEXTILVEREDELUNG Band 18, Nr. 5, 1983,
Seiten 157-162; R. GRIESSER: "Stand der instrumentellen Weissbewertung unter besonderer Berücksichtigung der Beleuchtung"

(73) Patentinhaber : OPTRONIK GMBH
OPTO-ELEKTRONISCHE SYSTEME
Kurfürstenstrasse 84
W-1000 Berlin 30 (DE)

(72) Erfinder : Fleischer, Johannes, Dr. Ing.
Goethestrasse 27
W-1000 Berlin 45 (DE)

(74) Vertreter : Säger, Manfred, Dipl.-Ing. et al
Säger & Partner Patentanwälte Postfach 81 08
09
W-8000 München (DE)

## Beschreibung

Die Erfindung betrifft eine optische Vorrichtung zum Messen des Lumineszenzanteils bei Oberflächen von einer mit Lumineszenz erzeugenden Aufhellem versetzten Probe wie Textilien, Papier, Kunststoffen, Farben, Lacken oder dergleichen gemäß dem Oberbegriff des Hauptanspruchs.

Seit längerer Zeit werden zur Beeinflußung der Farbe sogenannte Aufheller den Farbmitteln beigegeben, mit dem Ziel, eine ganz bestimmte gewünschte Farbwirkung des Produktes zu erreichen. So gibt es heute kaum ein weißes Papier, in dem keine Aufheller enthalten sind. Auch aus dem Textilbereich ist hinlänglich bekannt, zur Steigerung des Weißgrades sich der Aufheller zu bedienen.

Die Aufheller selbst sind lumineszierende Stoffe, die bei Bestrahlung mit ultravioletter Strahlung (UV) im sichtbaren Gebiet, vorzugsweise im blauen Bereich, sichtbares Licht abgeben. Dies geschieht nach der Stock'schen Regel, nach der die Atome bei UV-Einstrahlung angeregt werden und ihre Energie zu langwelligeren Gebieten abgeben. Die Differenzenergie wird als Wärme abgegeben. Wird ein solcher Aufheller dem Farbstoff beigemischt, so kann die Farbe je nach UV-Anteil der beleuchteten Lichtquelle ihr Aussehen ändern. Im Tageslicht ist ein natürlicher UV-Anteil enthalten, so daß mit Aufheller versehene Produkte durch zusätzliche Emission von blauem Licht brilliantweiß erscheinen.

Das von der Probe reflektierte Licht setzt sich dabei additiv zusammen aus dem reflektierten Anteil des sichtbaren Spektrums der Bestrahlungsquelle und dem Lumineszenzanteil. Dieser wiederum ist umso größer, je größer der UV-Anteil der anregenden Bestrahlung und die Menge des Aufhellers sind.

Die Farbmessung an aufgehellten Stoffen erfordert daher besondere Sorgfalt, da insbesondere die additive Größe der Lumineszenz eine einzige Messung unmöglich macht. Es ist bei einer Einmalmessung nicht festzustellen, wie sich der spektrale Reflexionsgrad zusammensetzt.

Es ist daher bekannt, daß zur Separierung dieser Anteile die Probe zumindest zweimal gemessen werden muß, und zwar einmal mit UV-Anteil und einmal ohne UV-Anteil.

Heutzutage wird dies durch das mechanische Einschwenken eines UV-Filters zwischen Lichtquelle und Probe erreicht. Allerdings ist dieses Verfahren nur im Laborbereich brauchbar, da es langsam vonstatten geht, ganz abgesehen davon, daß die dauernde mechanische Bewegung des UV-Filters eine stete Fehlerquelle bildet.

Zusammenfassen läßt sich also festhalten, daß mit der bekannten Vorrichtung die Messung im Online-Betrieb, d.h. am laufenden Band z.B. einer Papiermaschine nicht möglich ist, da es zu langsam ist. Außerdem bilden mechanisch bewegbare Teile eine stete Fehlerquelle.

Ferner kann die Farbmessung an aufgehellten Proben bei einer vorgegebenen Belichtungsart, vorzugsweise Tageslicht D65 nur dann sinnvoll durchgeführt werden, wenn zur Beleuchtung eine der Beleuchtungsnormlichtart möglichst ähnliche Lichtquelle verwendet wird. Technisch für die Beleuchtung gut geeignet sind Entladungslampen, vorzugsweise Xenon-Lichtlampen. Diese senden jedoch im UV-Gebiet (Anregungsgebiet für den Aufheller) mehr oder weniger Strahlung aus als es für die benötigte Beleuchtungsart notwendig ist. Da aber die spektrale Reflexionskurve, die für die Berechnung der Farbkoordinaten verwendet wird, auch von dem UV-Anteil abhängig ist, muß dieser durch Vorschalten eines geeigneten UV-Filters angeglichen werden. Leider macht sich aber bei langer Betriebsdauer die Alterung der Entladungslampe spürend bemerkbar, da immer weniger UV-Strahlung von der Lampe abgegeben wird. Die Meßergebnisse sind über längere Zeit nicht konstant. Auch ein Austausch der Entladungslampen bringt nur kurzfristige Hilfe. Im Online-Betrieb ist ein solches Meßverfahren völlig ungeeignet.

Zur Behebung dieses Nachteils ist ein Verfahren unter dem Begriff UV-Kalibrierung bekannt geworden ("Weißgradmessung unter besonderer Berücksichtigung der Beleuchtung", R. Griesser, Textilveredelung 18 (1983), Nr. 5, S. 157-162). Hierbei wird der UV-Anteil der Strahlung einer Xenon-Lampe teilweise durch ein mechanisch in den Strahlengang verschieblich eingebrachtes UV-Filter so abgeschwächt, daß die Summe der Xenon-Strahlung, die über eine Ulbricht'sche Mischkugel die Probe erreicht, in der Wirkung der Tageslichtbeleuchtung gleichgemacht werden kann. Bei längerer Betriebsdauer braucht das UV-Filter nur etwas aus dem Strahlengang herausgezogen zu werden, um den Einfluß der Alterung der Xenon-Lampe aufzuheben. Diese Anordnung ist jedoch für eine Online-Farbmessung sehr aufwendig.

Der Erfindung liegt die Aufgabe zugrunde, eine gattungsgemäße Vorrichtung einfach und robust ohne mechanisch bewegbaren Teile auszugestalten.

Diese Aufgabe wird bei einer gattungsgemäßen Vorrichtung erfindungsgemäß durch die beiden Nebenansprüche gelöst.

Es werden also zwei fest eingebaute Lichtquellen ohne mechanisch bewegbare Teile verwendet, wobei zur Messung des Aufhellergehaltes diese Proben wechselseitig einmal mit und einmal ohne UV bestrahlen. Wenn als Lichtquelle Entladungslampen für gepulstes Licht mit vorzugsweise getrennten Netzteilen verwendet werden, so daß bei elektronischer Auswertung zwei Messungen in 0,1 bis 1 mSek. durchgeführt werden können, so kann mit der erfindungsgemäßen Vorrichtung ein äußerst schnelles Meßverfahren angewendet werden, welches auch im Online-Betrieb einsetzbar ist. Man erhält für jede Messung eine spektrale Reflexionskurve, wobei die Flächendifferenz beider Kurven ein Maß für den Aufhellergrad bildet. Aufgrund fehlender mechanischer Teile ergibt sich ferner der Vorteil eines außerordentlichen kompakten und robusten Aufbaus.

Zur Farbmessung wird die Probe auch mit einem Mischlicht beleuchtet, und zwar dergestalt, daß man beide Lampen nacheinander oder gleichzeitig betreibt, beispielsweise gleichzeitig zündet, aber elektronisch gesteuert unterschiedlich lange anschaltet, so daß die zeitlich gemittelte Bestrahlung von der Probe in der Wirkung bezüglich des Aufhellers einer Beleuchtung mit vorgegebener Normlichtart gleichkommt. Ändert sich das Verhältnis sichtbare Strahlung zu UV-Strahlung, so braucht nur das Verhältnis der Einschaltzeiten der beiden Lampen geändert zu werden. Es sollte hierbei der UV-Anteil vorzugsweise separat gemessen werden. Anstelle der Steuerung der Einschaltzeiten kann eine ähnliche Wirkung erreicht werden, indem man die Betriebsspannung oder den Strom der Entladungslampe regelt.

Die erfindungsgemäße Vorrichtung kann hiebei in an sich bekannten Vorrichtungen für die 45/0° Meßgeometrie (DE-OS 33 32 986), oder für die D/0° oder D/8° Meßgeometrie im Rahmen einer Ulbricht'schen Kugel (DE-OS 34 06 848) eingesetzt werden.

Zweckmäßige Ausgestaltungen und Weiterbildungen der Erfindung sind in den Unteransprüchen gekennzeichnet.

Eine zweckmäßige Ausgestaltung wird nachfolgend unter Bezugnahme auf die Zeichnung näher erläutert. In dieser zeigt :

Figur 1 eine optische Meßvorrichtung für die 45/0° Meßgeometrie, im schematischen Querschnitt und

Figur 2 eine erfindungsgemäße Vorrichtung für die D/8° Meßgeometrie, im schemtischen Querschnitt.

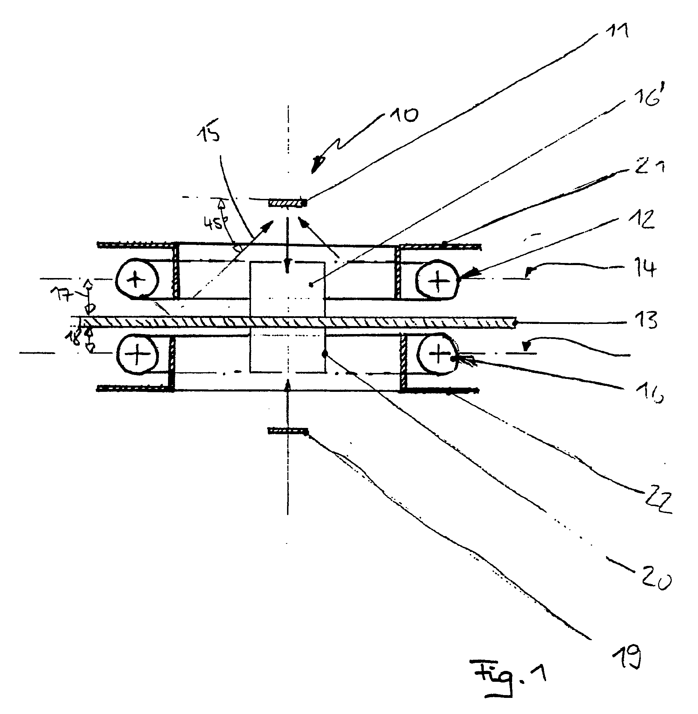

Die in Fig. 1 dargestellte, insgesamt mit 10 bezeichente erste optische Vorrichtung zum Messen des Lumineszenzanteils weist eine die Probe 11 bestrahlende erste Lichtquelle 12 in Form einer torusförmigen Entladungslampe für gepulstes Licht (Ringblitzlampe) auf. Die Ebene 14 der Lichtquelle verläuft parallel zu einem eben ausgebildeten Strahlenteiler 13, der zugleich als UV-Filter ausgebildet ist. Die Referenzprobe wird hierbei, wie schematisch mit einem Strahlengang 15 bezeichnet, mit einem Winkel von 45° beleuchtet. Senkrecht zur Oberfläche der Probe 10 ist ein erster Detektor 16 angeordnet, der vorzugsweise als Monochromator ausgebildet ist.

Spiegelsymmetrisch zu der von dem Strahlenteiler 13, der vorzugsweise halbdurchlässig ausgebildet ist, in einem ersten Abstand 17 angeordneten ersten Lichtquelle 12 ist mit einem Abstand 18 eine zweite Lichtquelle 16 gleicher Art und Ausbildung angeordnet. Ebenso spiegelsymmetrisch zu der Probe 11 ist eine Referenzprobe 19 vorgesehen, die spiegelsymmetrisch zu dem ersten Detektor 16 ein zweiter Detektor 20, der ebenfalls als Monochromator ausgebildet ist, angeordnet.

Ferner ist die erste Lichtquelle 12 mit einer Ringblende 21 versehen, die die direkte Lichteinstrahlung von der Lichtquelle 12 auf die auf derselben Seite des Strahlenteilers 13 angeordnete Probe 11 verhindert.

Eine gleiche Ringblende 22 ist auf der anderen Seite des Strahlenteilers 13 so angeordnet, daß die direkte Lichteinstrahlung von der zweiten Lichtquelle 16 zu der Referenzprobe 19 verhindert wird und dort nur am halbdurchlässigen Strahlenteiler reflektiertes Licht eintritt.

Bei der Bestrahlung der Probe 11 mittels der einen UV-Anteil abgebenden ersten Lichtquelle 12 gelangt auf die Probe Licht mit UV-Anteil, wohingegen bei Beleuchtung durch die zweite Lichtquelle 16 der UV-Anteil durch den Strahlenteiler 13 herausgefiltert wird. Allfällige direkt-reflektierte UV-Anteile werden sowohl von dem ersten Detektor 16 als auch von dem zweiten Detektor 20 nicht wahrgenommen, weil dieser auf UV-Licht nicht anspricht.

Mit beiden Messungen läßt sich dann rechnerisch der spektrale Reflexionsgrad ermitteln.

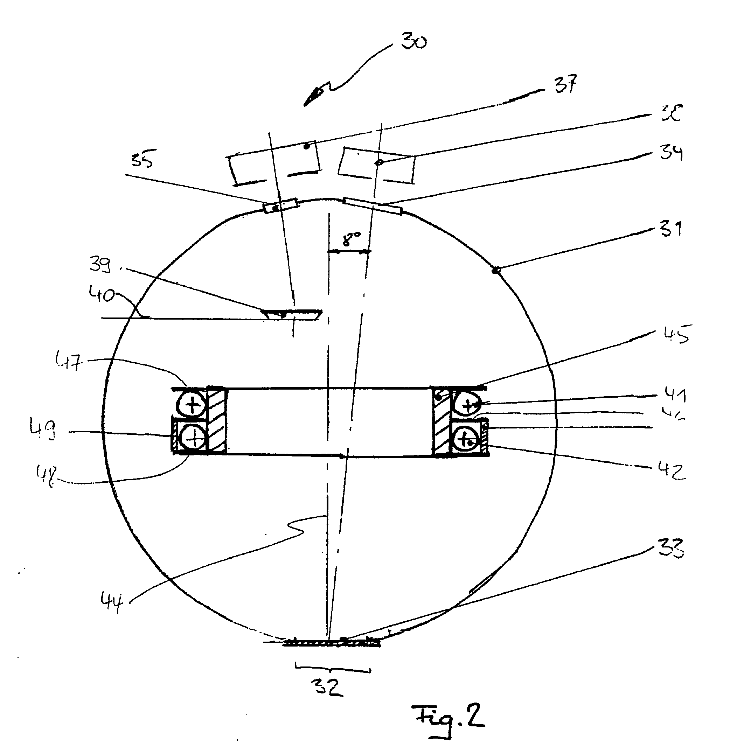

In Fig. 2 ist eine zweite Ausführungsform 30 der optischen Vorrichtung zum Messen des spektralen Anteils dargestellt. Hierbei ist ein Hohlkörper 31 in Form einer Ulbricht'schen Kugel vorgesehen, die in ihrem unterem Halbkugelbereich eine Meßöffnung 32 aufweist, an der eine Probe 33 angeordnet ist. Auf der anderen Halbkugel sind zwei Aperturen 34, 35 angeordnet, denen der erste und zweite Detektor 37 bzw. 38 zugeordnet ist, die ebenfalls als Monochromatoren ausgebildet sind. Die eine Apertur 34 ist bezüglich der durch den Kugelmittelpunkt laufenden Flächennormalen der Meßprobe 33 um 8° versetzt. Vor der anderen Apertur 35 ist eine Referenzprobe 39 mittels einer dünnen, das Meßergebnis nicht beeinflußenden Haltestange 40 angebracht. Selbstverständlich befindet sich die Referenzprobe 39 nicht im Strahlengang zu der Apertur 34.

Ferner sind in der Kugel 31 eine erste und zweite Lichtquelle 41 und 42, die als torusförmige Entladungslampen für gepulstes Licht sowie im übrigen hinsichtlich ihrer Abmessungen gleich ausgebildet sind, koaxial zueinander angeordnet, wobei ihre Symmetrieachse mit der Ebene-normalen 44 der Meßöffnung 32 zusammenfällt.

Beide Lichtquellen ist ein vorzugsweise als hohlzylindrischer Ring geringeren Durchmessers als Schatter zugeordnet. Ferner ist zwischen den beiden Lichtquellen 41, 42 ein sich an den Schatter 45 nach außen anschließender, kreisringförmiger Schatter 46 angeordnet. Parallel zu diesem sind noch ein oberer kreisringförmiger Schatter 47 sowie ein unterer kreisringförmiger Schatter 48 so vorgesehen, daß das von jeder Lichtquelle 41, 42 erzeugte Licht nur auf die möglichst mit einem diffusreflektierenden Anstrich versehene Innenwand der Kugel 31 fällt, so daß kein direktes Licht auf die Probe 33, die Referenzprobe 39 sowie die beiden Aperturen 34, 35 fällt. Eine der beiden Lichtquellen 42 ist zusätzlich mit einem umlaufenden UV-Filte 49 versehen, so daß bei der einen Messung der UV-Anteil mit auf die Probe 33 fällt. Bei Zünden der zweiten Lichtquelle 42 infolge des UV-Filters 49 jedoch nicht.

## Ansprüche

1. Optische Vorrichtung zum Messen des Lumineszenzanteils bei Oberflächen von einer mit Lumineszenz erzeugenden Aufhellern versetzten Probe oder zur Farbmessung an aufgehellten Proben wie Textilien, Papier, Kunststoff, Farben, Lacke oder dergleichen infolge der Doppelmessung des spektralen Reflexionsgrades der Probe einmal mit Licht mit UV-Anteil und einmal ohne UV-Anteil, mit einer die Probe (11, 33) unter einem bestimmten Winkel bestrahlenden ersten Lichtquelle (12, 41) und mit einem ersten Detektor (16, 38) zum Empfang des von der Oberfläche der Probe vorzugsweise senkrecht reflektierten Lichts oder einem davon geringfügig abweichenden Winkel, **dadurch gekennzeichnet,** daß eine zweite Lichtquelle (16, 42) vorgesehen ist, daß die erste und zweite Lichtquelle die Probe und eine Referenzprobe (19, 39) vorzugsweise unter einem solchen für die 45/0° Meßgeometrie geeigneten Winkel bestrahlen, daß zwischen den beiden Lichtquellen ein UV-Filter sowie ein ebener Strahlenteiler (13) vorhanden ist, daß ein zweiter Detektor (20) vorgesehen ist, daß die erste Lichtquelle als torusförmige Entladungslampe für gepulstes Licht ausgebildet ist, daß sich eine erste daß sich eine erste Apertur in einer Ebene parallel zur Ringebene (14) der ersten Lichtquelle (12) in einem ersten Abstand (17) befindet, der die erste Meßgeometrie definiert, daß der Strahlenteiler (13) den gesamten Kegelmantel zwischen der ersten Lichtquelle (12) und der ersten Apertur erfaßt, daß sich eine zweite Apertur im Spiegelbild der ersten bezüglich des Strahlenteilers (13) befindet, daß an die Stelle einer Apertur die Probe (11) einbringbar ist, während sich an der Stelle der anderen Apertur eine Referenzprobe (19) oder der zweite Detektor (20) zum Empfang von Referenzlicht befindet, daß für jede Lichtquelle eine Blende (21) vorgesehen ist, die deren direkte Lichteinstrahlung auf die Apertur auf derselben Seite des Strahlenteilers (13) abschirmt und daß auf der anderen Seite des Strahlenteilers (13) sowie parallel zu diesem die zweite torusförmige Entladungslampe (16) für gepulstes Licht in einem zweiten Abstand (18) angeordnet ist, der die zweite Meßgeometrie bestimmt.

2. Vorrichtung nach Anspruch 1, dadurch gekennzeichnet, daß beide Lichtquellen gleich ausgebildet sind und/oder Licht mit UV-Anteil abgeben.

3. Vorrichtung nach Anspruch 1 oder 2, dadurch gekennzeichnet, daß die zweite Lichtquelle (16) bezüglich des Strahlenteilers (13) so vorzugsweise spiegelsymmetrisch zur ersten Lichtquelle (12) angeordnet ist, daß damit dieselbe Meßgeometrie erreicht wird wie für die erste Lichtquelle (12).

4. Vorrichtung nach einem der Ansprüche 1 bis 3, dadurch gekennzeichnet, daß die Lichtquelle eine Kurzbogenlampe mit niedriger Leistung (kleiner 150 W) oder Ringblitzlampe ist.

5. Vorrichtung nach einem der Ansprüche 1 bis 4, dadurch gekennzeichnet, daß der Strahlenteiler (13) mit einer Licht und UV reflektierenden, dünnen transparenten Schicht oder Rasterspiegel mit einem Flächenverhältnis von vorzugsweise 1 : 1 bedampft ist.

6. Vorrichtung nach einem der Ansprüche 1 bis 5, dadurch gekennzeichnet, daß anstelle der Referenzprobe (19) ein lichtdurchlässig streuendes Medium angebracht ist und die Eintrittsapertur des Detektors bildet.

7. Vorrichtung nach einem der Ansprüche 1 bis 6, dadurch gekennzeichnet, daß die Blende im Querschnitt L-förmig mit einem hohlzylindrischen Ring ausgebildet ist, an dessen von dem Strahlenteiler (13) entfernten Ende ein sich nach außen anschließender kreisringförmiger Teil angebracht ist.

8. Vorrichtung nach dem Oberbegriff des Anspruchs 1, dadurch gekennzeichnet, daß ein Hohlkörper, vorzugsweise eine Ulbricht'sche Kugel (31) mit einer Meßöffnung (32) vorgesehen ist, daß als Lichtquelle zwei torusförmige Entladungslampen (41, 42) für gepulstes Licht in Verbindung mit einem symmetrisch dazu angeordneten, ringförmigen Schatter (45, 46, 47, 48) kleineren Durchmesser axialsymmetrisch zur Flächennormale (44) der Meßöffnung (32) so angeordnet ist, daß diese erst nach mindestens einmaliger Reflexion an der Innenwand des Hohlkörpers oder dem Schatter erreicht wird, so daß auf sie und die auf der anderen Seite des Schatters angeordneten beiden Aperturen (34, 35) für den ersten und zweiten Detektor (37, 38) nebst der einem derselben zugeordneten Referenzprobe (39) kein direktes Licht fällt, daß an die Stelle der Meßöffnung (32) die Probe einbringbar ist, wobei eine der Lichtquellen mit einem UV-Filter (49) versehen ist.

9. Vorrichtung nach Anspruch 8, dadurch gekennzeichnet, daß der Schatter als Halterung für die Lichtquellen (41, 42) dient.

10. Vorrichtung nach Anspruch 8 oder 9, dadurch gekennzeichnet, daß der Schatter als hohlzylindrischer Ring (45) ausgebildet ist.

11. Vorrichtung nach Anspruch 10, dadurch gekennzeichnet, daß sich an den Ring (45) axial nach außen ein kreisringförmiges lichtundurchlässiges Teile (46) zwischen den beiden Lichtquellen (41, 42) anschließt.

12. Vorrichtung nach einem der Ansprüche 8 bis 11, dadurch gekennzeichnet, daß sich an den hohlzylindrischen Ring (45) an dessen Ober- und Unterseite nach außen ein ebenfalls lichtundurchlässig ausgebildeter kreisringförmiger oberer bzw. unterer Teil (47, 48) anschließt.

13. Vorrichtung nach einem der Ansprüche 8 bis 12, dadurch gekennzeichnet, daß der zweiten Lichtquelle (42) ein von den kreisringförmigen Teilen (46, 48) getragener UV-Filter (49) in Form eines Hohlzylinders zugeordnet ist.

14. Vorrichtung nach einem der Ansprüche 1 bis 13, dadurch gekennzeichnet, daß beide Detektoren als Monochromatoren ausgebildet sind.

15. Vorrichtung nach einem der Ansprüche 1 bis 14, dadurch gekennzeichnet, daß die Detektoren nicht auf UV-Licht ansprechen.

16. Vorrichtung nach einem der Ansprüche 1 bis 15, dadurch gekennzeichnet, daß die gewünschten spektralen Emissionscharakteristika der Lichtquellen durch spektralselektive Gläser der Lampe selbst oder auf den Lichtquellen angebrachten, beispielsweise im Tauchverfahren hergestellten Überzügen erreichbar sind.

17. Vorrichtung nach einem der Ansprüche 1 bis 16, dadurch gekennzeichnet, daß die Lichtquellen getrennte Hochspannungsnetzteile aufweisen.

18. Vorrichtung nach einem der Ansprüche 1 bis 17, dadurch gekennzeichnet, daß eine Ansteuervorrichtung für die beiden Entladungslampen vorgesehen ist, die zur Messung des Aufhellergehaltes nacheinander und zur Farbmessung zwecks der Nacheinstellung der optischen Wirkung von Lichtarten mit UV-Anteil – vorzugsweise Tageslicht D65 – beide Entladungslampen mit unterschiedlicher Einschaltzeit und/oder unterschiedlichem Strom bzw. unterschiedlichen Spannung angesteuert werden.

19. Vorrichtung nach Anspruch 1, dadurch gekennzeichnet, daß der ebene Strahlenteiler (13) das UV-Filter bildet.

## Claims

1. Optical apparatus for measuring the luminescence component in the case of surfaces of a test piece mixed with brighteners producing luminescence, or for colour measurement of brightened test pieces such as textiles, paper, plastics, paints, lacquers or the like by means of two fold measurement of the spectral degree of reflection of the test piece firstly with light having a UV component and secondly without a UV component, with a first light source (12, 41) irradiating the test piece (11, 13) at a particular angle and with a first detector (16', 38) for receiving the light reflected from the surface of the test piece preferably at right angles or an angle differing slightly from this, characterised in that a second light source (16, 42) is provided, that the first and the second light source irradiate the test piece and a reference test piece (19, 39) preferably at such an angle suitable for the 45/0° measurement geometry, that a UV filter and a flat radiation divider (13) arc present between the two light sources, that a second detector (20) is provided, that the first light source is formed as a toroidal discharge lamp for pulsed light, that a first opening is located in a plane parallel to the ring plane (14) of the first light source at a first distance (17) defining the first measurement geometry, that the radiation divider (13) intercepts the entire conical envelope between the first light source (12) and the first opening, that a second opening is located as a mirror image of the first with respect to the radiation divider (13), that the test piece (11) can be brought into the position of one opening, whereas a reference test piece (19) or the second detector (20) for receiving reference light is located in the position of the other opening, that for each light source a screen (21) is provided which screens off the direct light irridiation onto the opening on the same side of the radiation divider (13) and that on the other side of and parallel to the radiation divider (13) the second toroidally shaped discharge lamp (16) for pulsed light is arranged at a second distance (18) which determines the second measurement geometry.

2. Apparatus according to Claim 1, characterised in that the light sources are made the same and/or emit light with a UV component.

3. Apparatus according to Claim 1 or 2, characterised in that the second light source (16) is so arranged with respect to the radiation divider, preferably as a mirror image of the first light source, that the same measurement geometry is obtained as for the first light source (12).

4. Apparatus according to any one of Claims 1 to 3, characterised in that the light source is a short arc lamp with low output (less than 150 watts) or an annular arc lamp.

5. Apparatus according to any one of Claims 1 to 4, characterised in that the radiation divider (13) is coated by evaporation with light and UV reflecting, thin transparent layer or grating mirror with a surface ratio of preferably 1 : 1.

6. Apparatus according to any one of Claims 1 to 5, characterised in that instead of the reference test piece (19) a light-permeable scattering medium is provided and forms the inlet opening of the detector.

7. Apparatus according to any one of Claims 1 to 6, characterised in that the screen has an L-shaped cross section and is formed with a hollow cylindrical ring, and that at the end of the ring remote from the radiation divider (13) an outwardly adjacent part having the shape of a circular ring is provided.

8. Apparatus according to the generic part of Claim 1, characterised in that a hollow body, preferably an Ulbricht sphere (31) is provided with a measurement opening (32), that the light source consists of two toroidally shaped discharge lamps (41, 42) for pulsed light in conjunction with an annular screen (45, 46, 47, 48) of smaller diameter and arranged symmetrically with respect to the lamps, and the source is arranged axially symmetrically with respect to the surface normal (44) of the measurement opening (32) in such a manner that this is reached only after at least one reflection on the inner wall of the hollow body or the screen, so that no direct light falls on this and on the two apertures (34, 35) for the first and second detectors (37, 38) which are arranged on the other side of the screen and on the reference test piece (39) provided for one of them, and that the test piece can be brought into the position of the measurement opening, and one of the light sources is provided with a UV filter (49).

9. Apparatus according to claim 8, characterised in that the screen serves as a holder for the light sources (41, 42).

10. Apparatus according to Claim 8 or 9, characterised in that the screen is formed as a hollow cylindrical ring (45).

11. Apparatus according to Claim 10, characterised in that adjacent to the ring (45) and extending axially outwards from it there is an element in the form of a circular ring and opaque to light, between the two light sources.

12. Apparatus according to any one of Claims 8 to 11, characterised in that adjacent to the top and bottom end of the hollow cylindrical ring (45), respectively, there is a top and a bottom part (47, 48), respectively, which extends outwardly and is also formed as a circular ring imprevious to light.

13. Apparatus according to any one of claims 8 to 12, characterised in that a UV filter (49) carried by the parts in the form of circular rings (46, 48) and formed as a hollow cylinder is associated with the second light source (42).

14. Apparatus according to any one of Claims 1 to 13, characterised in that the two detectors are formed as monochromators.

15. Apparatus according to any one of Claims 1 to 14, characterised in that the detectors do not respond to UV light.

16. Apparatus according to any one of Claims 1 to 15, characterised in that the required spectral emission characteristics of the light sources are attainable by spectrally selective glasses of the lamps themselves or by coatings applied to the light sources, for instance by the dipping process.

17. Apparatus according to any one of Claims 1 to 16, characterised in that the light sources have separate high voltage supply parts.

18. Apparatus according to any one of Claims 1 to 17, characterised in that a control apparatus for the two discharge lamps is provided, and both discharge lamps are controlled with different running time and/or different current or different voltage, for measurement of the brightener content in succession and for colour measurement for the purpose of readjustment of the optical effect of kinds of light with a UV component, preferably daylight D65.

19. Apparatus according to Claim 1, characterised in that the flat radiation divider (13) forms the UV filter.

**Revendications**

1. Dispositif optique pour mesurer la proportion de luminescence sur des surfaces d'un échantillon mélangé à des agents de blanchiment produisant de la luminescence ou pour procéder à la colorimétrie sur des échantillons blanchis tels que des textiles, du papier, de la matière plastique, des couleurs, des vernis ou analogues, colorimétrie obtenue par la double mesure du degré de réflexion spectrale de l'échantillon d'une part avec de la lumière contenant une proportion d'UV et d'autre part avec de la lumière sans UV, au moyen d'une première source lumineuse (12, 41) éclairant l'échantillon (11, 33) sous un certain angle et au moyen d'un premier détecteur (16', 38) destiné à recevoir la lumière réfléchie par la surface de l'échantillon de préférence perpendiculairement ou sous un angle s'écartant très légèrement de la perpendiculaire, caractérisé par le fait qu'une deuxième source lumineuse (16, 42) est prévue, que la première et la deuxième sources lumineuses éclairent l'échantillon et un échantillon de référence (19, 39) de préférence sous un tel angle approprié à la géométrie de mesure 45/0°, qu'entre les deux sources lumineuses se trouve un filtre UV ainsi qu'un diviseur de rayon (13) plan, qu'un deuxième détecteur (20) est prévu, que la première source lumineuse est réalisée sous la forme d'une lampe de décharge toroïdale pour lumière pulsée, qu'un premier port se trouve dans un plan parallèle au plan circulaire (14) de la première source lumineuse (12) à une première distance (17) de celle-ci qui définit la première géométrie de mesure, que le diviseur de rayon (13) englobe l'ensemble de l'enveloppe conique entre la première source lumineuse (12) et le premier port, qu'un deuxième port se trouve dans l'image du premier port réfléchi par rapport au diviseur de rayon (13), qu'à la place d'un port on peut insérer l'échantillon (11) tandis qu'à la place de l'autre port se trouve un échantillon de référence ou le deuxième détecteur (20) destiné à recevoir la lumière de référence, que pour chaque source lumineuse est prévu un diaphragme (21) qui fait écran à la projection directe de la lumière venant de la source lumineuse sur le port placé sur le même côté que le diviseur de rayon (13) et que sur l'autre côté du diviseur de rayon (13) ainsi que parallèlement à celui-ci est disposée à une deuxième distance (18) la deuxième lampe de décharge toroïdale (16) pour lumière pulsée, distance (18) déterminant la deuxième géométrie de mesure.

2. Dispositif selon la revendication 1, caractérisé par le fait que les deux sources lumineuses sont réalisées de manière identique et/ou émettent de la lumière contenant une proportion d'UV.

3. Dispositif selon la revendication 1 ou 2, caractérisé par le fait que la deuxième source lumineuse (16) est disposée par rapport au diviseur de rayon (13) de préférence de manière symétrique à la première source lumineuse (12) de telle sorte que de ce fait soit obtenue la même géométrie de mesure que pour la première source lumineuse (12).

4. Dispositif selon l'une des revendications 1 à 3, caractérisé par le fait que la source lumineuse est une lampe à arc court à faible puissance (inférieure à 150 W) ou une lampe-flash circulaire.

5. Dispositif selon l'une des revendications 1 à 4, caractérisé par le fait que le diviseur de rayon (13) est revêtu par vaporisation d'une couche transparente mince réfléchissant la lumière et les UV ou d'un miroir à grille dont le rapport de section est de préférence égal à 1 : 1.

6. Dispositif selon l'une des revendications 1 à 5, caractérisé par le fait qu'à la place de l'échantillon de référence (19) est fixé un agent de dispersion perméable à la lumière et constituant le port d'entrée du détecteur.

7. Dispositif selon l'une des revendications 1 à 6, caractérisé par le fait que le diaphragme est réalisé avec une section transversale en forme de L et comporte une bague cylindrique creuse, un élément de forme circulaire allant se raccorder vers l'extérieur étant fixé à l'extrémité la plus éloignée du diviseur de rayon (13).

8. Dispositif selon le préambule de la revendication 1, caractérisé par le fait qu'il est prévu un corps creux, de préférence une bille d'Ulbricht (31), muni d'un orifice de mesure (32), que la source lumineuse formée de deux lampes de décharge toroïdales (41, 42) pour lumière pulsée associée à un réflecteur (45, 46, 47, 48) de forme anulaire, disposé symétriquement à cette source dont le diamètre est inférieur, est disposée symétriquement à la perpendiculaire (44) de la surface de l'orifice de mesure (32) de telle sorte que cet orifice ne se trouve atteint qu'après au moins une réflexion sur la paroi intérieure du corps creux ou du réflecteur, de telle sorte que sur cet orifice et sur les deux ports (34, 35) situés sur l'autre côté de l'abatjour pour le premier et le deuxième détecteurs (37, 38) ainsi que sur l'échantillon de référence (39) associé à l'un de ces détecteurs ne tombe aucune lumière directe, qu'il soit possible d'insérer l'échantillon à la place de l'orifice de mesure (32), auquel cas l'une des sources lumineuses est munie d'un filtre à UV (49).

9. Dispositif selon la revendication 8, caractérisé par le fait que le réflecteur sert de maintien pour les sources lumineuses (41, 42).

10. Dispositif selon la revendication 8 ou 9, caractérisé par le fait que le réflecteur est réalisé sous la forme d'une bague cylindrique creuse (45).

11. Dispositif selon la revendication 10, caractérisé par le fait qu'à la bague 45 se raccorde, entre les deux sources lumineuses (41, 42), axialement vers l'extérieur, un élément (46) opaque à la lumière et de forme circulaire.

12. Dispositif selon l'une des revendications 8 à 11, caractérisé par le fait qu'à la bague cylindrique creuse (45) se raccorde sur son côté supérieur et sur son côté inférieur vers l'extérieur, un élément supérieur ou inférieur (47, 48) également de forme circulaire et opaque à la lumière.

13. Dispositif selon l'une des revendications 8 à 12, caractérisé par le fait qu'à la deuxième source lumineuse est associé un filtre à UV (49) en forme de cylindre creux et supporté par les éléments de forme circulaire (46, 48).

14. Dispositif selon l'une des revendications 1 à 13, caractérisé par le fait que les deux détecteurs sont des monochromateurs.

15. Dispositif selon l'une des revendications 1 à 14, caractérisé par le fait que les détecteurs sont insensibles à la lumière UV.

16. Dispositif selon l'une des revendications 1 à 15, caractérisé par le fait qu'il est possible d'obtenir les courbes caractéristiques d'émission spectrale souhaitées des sources lumineuses par des verres sélectifs de la lampe elle-même ou par des revêtements appliqués aux sources lumineuses par exemple par immersion.

17. Dispositif selon l'une des revendications 1 à 16, caractérisé par le fait que les sources lumineuses présentent des éléments haute tension distincts.

18. Dispositif selon l'une des revendications 1 à 17, caractérisé par le fait qu'il est prévu un dispositif de commande pour les deux lampes à décharge qui sont commandées l'une après l'autre pour mesurer la teneur en agent de blanchiment et pour la colorimétrie, afin de permettre le réajustement de l'effet optique de catégories de lumière contenant des UV – de préférence lumière du jour D65 –, les deux lampes de décharge étant commandées par des temps de mise en service différents et/ou des intensités ou des tensions différentes.

19. Dispositif selon la revendication 1, caractérisé par le fait que le diviseur de rayon (13) plan constitue le filtre à UV.

Fig. 1

Fig.2